(19) Europäisches Patentamt
European Patent Office
Office européen des brevets

(11) **EP 4 366 119 A1**

(12) **EUROPEAN PATENT APPLICATION**
published in accordance with Art. 153(4) EPC

(43) Date of publication:
**08.05.2024 Bulletin 2024/19**

(21) Application number: **22942078.1**

(22) Date of filing: **19.05.2022**

(51) International Patent Classification (IPC):
**H02J 7/00** (2006.01)

(52) Cooperative Patent Classification (CPC):
**H02J 7/00**

(86) International application number:
**PCT/CN2022/093840**

(87) International publication number:
**WO 2023/221037 (23.11.2023 Gazette 2023/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde, Fujian 352100 (CN)**

(72) Inventors:
• **SUN, Long**
**Ningde, Fujian 352100 (CN)**
• **XIE, Lan**
**Ningde, Fujian 352100 (CN)**
• **LIN, Zhen**
**Ningde, Fujian 352100 (CN)**

(74) Representative: **Rowlands, Stuart Michael et al**
**Maucher Jenkins**
**Seventh Floor Offices**
**Artillery House**
**11-19 Artillery Row**
**London SW1P 1RT (GB)**

(54) **CHARGING METHOD, BATTERY MANAGEMENT SYSTEM, BATTERY, AND CHARGING DEVICE**

(57)     A charging method (200), a battery management system (122), a battery (121), and a charging device (110) can effectively remove metal already precipitated on a negative electrode of a battery and metal precipitated in a charging process to ensure the safety performance of the battery. The charging method (200) includes: sending (S210) a first command to a charging device, the first command being used to control the charging device to output an oscillation current to the battery during a first time period in a charging process, where the oscillation current includes n cycle periods, n being a positive integer greater than 1, each of the cycle periods includes a first sub-period and a second sub-period, a current output by the charging device during the first sub-period is a first current, a current output by the charging device during the second sub-period is a second current, and a direction of the first current is opposite to that of the second current; and sending (S220) a second command to the charging device, the second command being used to instruct the charging device to charge the battery during a second time period in the charging process.

200

Send a first command to a charging device, the first command being used to control the charging device to output an oscillation current to a battery during a first time period in a charging process ～ S210

Send a second command to the charging device, the second command being used to instruct the charging device to charge the battery during a second time period in the charging process ～ S220

FIG. 2

**Description**

**TECHNICAL FIELD**

This application relates to the field of battery technologies, and in particular to a charging method, a battery management system, a battery, and a charging device.

**BACKGROUND**

With the development over time, electric vehicles, with their advantages such as high environmental friendliness, low noise, and low use costs, have great market prospects and can effectively promote energy conservation and emission reduction, conducive to the development and progress of society. For electric vehicles and related fields, battery technology is an important factor in connection with their development.

With the development of battery technologies, various performances of batteries are constantly improved, among which the safety performance of batteries is particularly important. If the safety performance of a battery cannot be guaranteed, the battery cannot be used. Therefore, how to guarantee the safety performance of batteries is an urgent technical problem that needs to be solved in battery technology.

**SUMMARY**

This application provides a charging method, a battery management system, a battery, and a charging device, so as to effectively remove metal precipitated on a negative electrode of a battery and prevent metal precipitation in a charging process to ensure the safety performance of the battery.

According to a first aspect, a charging method is provided, applied to a battery management module of a battery, including: sending a first command to a charging device, the first command being used to control the charging device to output an oscillation current to the battery during a first time period in a charging process, where the oscillation current includes n cycle periods, n being a positive integer greater than 1, each of the cycle periods includes a first sub-period and a second sub-period, a current output by the charging device during the first sub-period is a first current, a current output by the charging device during the second sub-period is a second current, and a direction of the first current is opposite to that of the second current; and sending a second command to the charging device, the second command being used to instruct the charging device to charge the battery during a second time period in the charging process.

With the charging method provided in this application, the metal precipitated on the negative electrode in the charging process can be dissolved, which makes tips of metal dendrites smooth or even disappear, so that a short circuit in a battery cell caused by the dendrites growing to a certain extent and piercing through a separator between a positive electrode and a negative electrode can be avoided, ensuring the safety performance of the battery. This charging method can also play a better role in removing the metal precipitated from the battery that has already experienced metal precipitation.

In some embodiments, the charging process includes at least one first time period and at least one second time period.

In this way, the lithium precipitated can be removed more flexibly in the charging process, and the battery management module can select a most favorable charging strategy for the battery at a different stage of the charging process, that is, remove the lithium dendrites for the battery to the greatest extent by removing lithium precipitated in different ways to ensure the safety performance of the battery.

In some embodiments, the first current is a charging current of the battery, the second current is a discharging current of the battery, and a quantity of electricity charged with the first current during the first sub-period is less than or equal to a quantity of electricity discharged with the second current during the second sub-period.

Lithium precipitation often occurs in the charging process. Therefore, during the first time period, the quantity of electricity charged being less than or equal to the quantity of electricity discharged can avoid generation of new lithium dendrites in removal of lithium dendrites, thereby improving the effect of removing the lithium dendrites during the first time period to ensure the safety performance of the battery. In addition, if large-scale fluctuations in the SOC of the battery occurs, the lithium precipitation window changes accordingly, and a magnitude of the oscillation current during the first time period needs to change accordingly to avoid exceeding a corresponding maximum current in the lithium precipitation window. Thus, the quantity of electricity charged being basically equal to the quantity of electricity discharged can prevent large-scale fluctuations in the SOC of the battery so that the oscillation current can always maintain a same magnitude of current output during the first time period, simplifying the process of removing the lithium precipitated and avoiding complex current regulation strategies.

In some embodiments, a duration of the first sub-period is shorter than or equal to a duration of the second sub-period.

This can ensure that the quantity of electricity charged is less than or equal to the quantity of electricity discharged to avoid generation of new lithium dendrites in removal of lithium dendrites, thereby improving the effect of removing the lithium dendrites during the first time period to ensure the safety performance of the battery. In addition, this can also avoid the large-scale fluctuations in the SOC of the battery during the first time period in the charging process so that the oscillation current can always be output as a current of a same magnitude during the first time period, simplifying the process of removing the lithium precipitated and avoiding complex current regulation strategies.

In some embodiments, the method further includes: receiving a maximum output frequency of the charging device sent by the charging device; and determining a duration of the cycle period based on the maximum output frequency.

A shorter duration of the cycle period indicates that less fluctuations in the quantity of electricity of the battery may occur during a single cycle period and that the effect on removing the lithium dendrites during the first time period is better. Considering the capability of the charging device, the battery management module determines the duration of the cycle period based on the maximum output frequency of the charging device and can develop reasonable oscillation current parameters and remove the lithium metal precipitated and lithium dendrites from the battery with that oscillation current. This can better dissolve the lithium precipitated on the negative electrode, making tips of the lithium dendrites smooth or even disappear, so that a short circuit in a battery cell caused by the lithium dendrites growing to a certain extent and piercing through a separator between a positive electrode and a negative electrode can be avoided, ensuring the safety performance of the battery.

In some embodiments, the first sub-period and/or the second sub-period is 2 ms.

Shorter durations of the first sub-period and the second sub-period require a higher maximum output frequency that can be output by the charging device and a higher cost of providing a compliant charging device. A too-small sub-period value is likely to cause the charging device to be unable to fulfill its capability, while a too-large sub-period value is likely to cause large-scale fluctuations in the SOC during the first sub-period or the second sub-period, affecting the effect on removing the lithium dendrites. Therefore, appropriate values for the first sub-period and the second sub-period may help to achieve a better effect on removing the lithium dendrites, avoid lithium precipitation when the battery is charged, and ameliorate a situation to some extent in which the battery already has lithium precipitated.

In some embodiments, a number n of the cycle periods is 10,000.

This value is suitable for a variety of states of the battery and can have a good effect on removing the lithium precipitated and reducing the dendrites. It has been experimentally verified that thickness of a lithium precipitation zone in the battery can be significantly reduced after 10,000 cycles, which is conducive to extending the life of the battery and reducing safety risks during use of the battery.

In some embodiments, the method further includes: obtaining a state of charge, SOC, and a state of health, SOH, of the battery; and determining a maximum magnitude of the first current and/or the second current based on the SOC and the SOH.

The battery management module determines the maximum magnitude of the oscillation current by taking into account the SOC and SOH of the battery, which can avoid precipitation of additional metal caused by the magnitude of the oscillation current exceeding the corresponding magnitude of current in the current lithium precipitation window of the battery, helping the oscillation current to remove the lithium metal precipitated in the charging process within a suitable range, and can also remove the lithium metal already precipitated in the battery to some extent, ensuring the safety performance of the battery.

In some embodiments, the first command includes a maximum magnitude of the first current and/or the second current.

The battery management module sends the maximum magnitude of the oscillation current to the charging device while instructing the charging device to output the oscillation current to the battery, which can improve the efficiency of communication between the battery management module and the charging device and ensure that the charging device outputs the oscillation current at a suitable magnitude to the battery to avoid the precipitation of additional metal, ensuring the safety performance of the battery.

In some embodiments, the first command is sent to the charging device when the battery is connected to the charging device.

Making sure that the battery is properly connected to the charging device before proceeding with charging may ensure that the oscillation current output by the charging device and the charging current during the second time period can flow properly through the battery, so as to avoid charging faults and ensure the safety performance of the battery in the charging process while improving the charging efficiency.

In some embodiments, the first command is sent to the charging device when it is determined that the battery meets at least one of the following conditions: a temperature of the battery is less than or equal to a first threshold; the battery is being charged in fast charging mode, the fast charging mode being a charging mode with a charging speed greater than or equal to a second threshold; the battery has completed x cycles of charging and discharging; the battery has lost y% of its capacity; and the battery has been in service for z days, where both x and z are positive integers and y is a positive number.

The charging device is instructed to output an oscillation current to the battery when it is determined that the battery meets at least one of the foregoing conditions, which allows oscillation current resources to be reasonably used and prevents the charging device from still outputting an oscillation current to a battery that is a new battery, thereby improving charging efficiency and reducing charging time. In addition, outputting an oscillation current to the battery that has been used to a certain extent can effectively use the oscillation current to remove the lithium metal precipitated, improving the effect of the oscillation current in removing the lithium metal and ensuring the safety performance of the battery.

According to a second aspect, a charging method is provided, applied to a charging device and including: receiving a first command sent by a battery management module of a battery; outputting an oscillation current to the battery during a first time period in a charging process according to the first command, where the oscillation current includes n cycle periods, n being a positive integer greater than 1, each of the cycle periods includes a first sub-period and a second sub-period, a current output during the first sub-period is a first current, a current output during the second sub-period is a second current, and a direction of the first current is opposite to that of the second current; receiving a second command sent by the battery management module; and charging the battery during a second time period in the charging process according to the second command.

In some embodiments, the charging process includes at least one first time period and at least one second time period.

In some embodiments, the first current is a charging current of the battery, the second current is a discharging current of the battery, and a quantity of electricity charged with the first current during the first sub-period is less than or equal to a quantity of electricity discharged with the second current during the second sub-period.

In some embodiments, a duration of the first sub-period is shorter than or equal to a duration of the second sub-period.

In some embodiments, the method further includes: sending a maximum output frequency of the charging device to the battery management module, the maximum output frequency being used to determine a duration of the cycle period.

In some embodiments, the first sub-period and/or the second sub-period is 2 ms.

In some embodiments, a number n of the cycle periods is 10,000.

In some embodiments, the first command includes a maximum magnitude of the first current and/or the second current, the maximum magnitude of the first current and/or the second current being determined based on a state of charge, SOC, and a state of health, SOH, of the battery.

In some embodiments, the receiving a first command sent by a battery management module of a battery includes: receiving the first command sent by the battery management module of the battery when the battery is connected to the charging device.

According to a third aspect, a battery management system is provided for performing the method according to any of the embodiments of the first aspect.

According to a fourth aspect, a battery is provided, including the battery management system according to the third aspect.

According to a fifth aspect, a charging device is provided for performing the method according to any of the embodiments of the second aspect.

According to a sixth aspect, a computer readable storage medium is provided, where the computer readable storage medium stores a computer program, and when the computer program is run, the method according to any of the embodiments of the first aspect or the second aspects is performed.

According to a seventh aspect, an apparatus for charging is provided, including a processor and a storage medium, where the storage medium stores instructions, and when the instructions are run by the processor, the apparatus is enabled to perform the method according to any of the embodiments of the first or second aspects.

BRIEF DESCRIPTION OF DRAWINGS

To describe the technical solutions of the embodiments of this application more clearly, the following briefly describes the accompanying drawings required for describing the embodiments of this application. It will be apparent that the accompanying drawings described below show merely some embodiments of this application, and persons of ordinary skill in the art may still derive other drawings from the accompanying drawings without creative efforts.

FIG. 1 is an architectural diagram of a charging system to which an embodiment of this application is applied;
FIG. 2 is a schematic block diagram of a charging method according to an embodiment of this application;
FIG. 3 is a schematic diagram of an oscillation current according to an embodiment of this application;
FIG. 4 is a schematic flowchart of a charging method according to an embodiment of this application;

FIG. 5 is a schematic block diagram of another charging method according to an embodiment of this application; and
FIG. 6 is a schematic block diagram of an apparatus for charging according to an embodiment of this application.

The accompanying drawings are not drawn to scale.

## DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the descriptions of this application, it should be noted that, unless otherwise stated, "plurality" means two or more; and the orientations or positional relationships indicated by the terms "upper", "lower", "left", "right", "inside", "outside", and the like are merely intended to help the descriptions of this application and simplify the descriptions other than indicate or imply that the apparatuses or components must have specific orientations, or be constructed and manipulated with specific orientations, and therefore shall not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of this application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of polypropylene (polypropylene, PP), polyethylene (polyethylene, PE), or the like. In addition, the electrode assembly may be a wound structure or a stacked structure, but the embodiments of this application are not limited thereto.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

To meet different power requirements, the battery may include a plurality of battery cells, and the plurality of battery cells may be connected in series, parallel, or series-parallel, where being connected in series-parallel means a combination of series and parallel connections. Optionally, multiple battery cells may be connected in series, parallel, or series-parallel to form a battery module first, and then multiple battery modules are connected in series, parallel, or series-parallel to form a battery. In other words, the plurality of battery cells may be directly combined into a battery, or may first be combined into battery modules which are then combined into a battery. The battery is then disposed in an electric device to provide electrical energy for the electric device.

For the development of battery technologies, various design factors need to be considered, for example, performance parameters such as energy density, cycle life, discharge capacity, and charge and discharge rate, as well as safety performance of the battery.

In the charging process of a battery, in some special cases, such as in a case of a low temperature during charging and a large charge rate, metals, such as lithium, may be precipitated from the negative electrode. Lithium precipitation refers to a process in which lithium ions deintercalated from a positive electrode cannot be embedded into a negative electrode in a timely manner in a charging process and form metallic lithium element on a surface of the negative electrode. The lithium element precipitated on the surface of the negative electrode often exists in the form of dendrites, and the dendrites growing to a certain extent are likely to pierce through a separator between the positive electrode and the negative electrode, causing a short circuit in a battery cell, which seriously affects the safety performance of the battery.

In view of this, this application provides a charging method in which a charging device is controlled to output a high frequency oscillation current at a specified magnitude and with a specified duration to the battery in the charging process to ensure the safety of the battery. During the duration of the high frequency oscillation current, the alternating forward and reverse oscillation current can make the battery self-heat to accelerate migration of the metal from the tip of a dendrite to the root, making the dendrite smooth and less likely to pierce the separator; and in addition, an ion concentration difference between the tip of the dendrite and the root can be induced by the high frequency oscillation current, and the metal at the tip is preferentially transformed into ions and dissolved in an electrolyte when discharging, so as to remove the metal and dendrites precipitated.

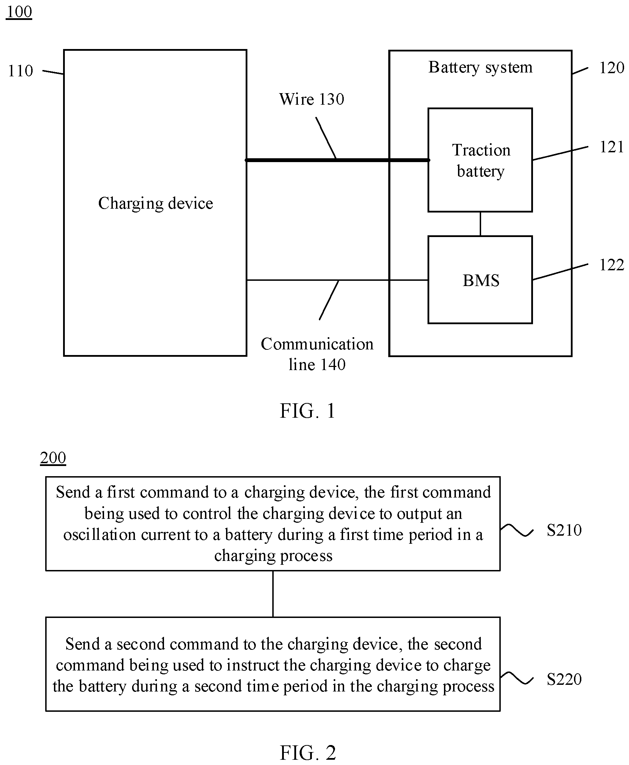

FIG. 1 is an architectural diagram of a charging system to which an embodiment of this application is applied. As shown in FIG. 1, the charging system 100 may include: a charging device 110 and a battery system 120. Optionally, the battery system 120 may be a battery system in an electric vehicle (including a battery electric vehicle and a plug-in hybrid electric vehicle) or a battery system in other application scenarios.

Optionally, the battery system 120 may be provided with at least one battery pack (battery pack), and the at least one battery pack as a whole may be collectively referred to as a battery 121. In terms of category, the battery 121 may be a battery of any type, including but not limited to a lithium-ion battery, a lithium metal battery, a lithium-sulfur battery, a lead-acid battery, a nickel-cadmium battery, a nickel-metal hydride battery, or a lithium-air battery. In terms of scale, the battery 121 in this embodiment of this application may be a cell/battery cell (cell), or may be a battery module or a battery pack, where the battery module or battery pack may be formed by a plurality of batteries connected in series or parallel. In this embodiment of this application, a specific type and scale of the battery 121 are not specifically limited.

In addition, in order to intelligently manage and maintain the battery 121 to prevent overcharge and overdischarge of the battery 121 and extend service life of the battery, the battery system 120 is generally further provided with a battery management system (battery management system, BMS) 122 for charge and discharge management, high voltage control, battery protection, battery data acquisition, battery state evaluation, and the like. Optionally, the BMS 122 may be integrated with the battery 121 in a same device or apparatus, or the BMS 122 may be disposed outside the battery 121 as a separate device/apparatus.

The charging device 110 may output charging power according to a charging demand of the BMS 122 to charge the battery 121. For example, the charging device 110 may output voltage and current according to a voltage requirement and a current requirement sent by the BMS 122. Optionally, the charging device 110 in this embodiment of this application may be a charging pile, also referred to as a charger. The charging pile herein may be, for example, a common charging pile, a super charging pile, or a charging pile supporting vehicle to grid (vehicle to grid, V2G) mode.

As shown in FIG. 1, the charging device 110 may be connected to the battery 121 through a wire 130 and to the BMS 122 through a communication line 140, where the communication line 140 is used for information exchange between the charging device 110 and the BMS. In an example, the communication line 140 includes but is not limited to a control area network (control area network, CAN) communication bus or a daisy chain (daisy chain) communication bus.

In addition to communicating with the BMS 122 through the communication line 140, the charging device 110 may communicate with the BMS 122 through a wireless network. A wired or wireless communication type between the charging device 110 and the BMS 122 is not limited in this embodiment of this application.

FIG. 2 is a schematic diagram of a charging method 200 for a battery 121 according to an embodiment of this application. The method 200 can be applied to a battery management module of the battery, for example, a BMS 122 of the battery 121. In other words, in a possible implementation, the method 200 may be performed by the BMS 122 in FIG. 1. This embodiment of this application is illustrated by using the battery management module being the BMS as an example, and the method 200 may include at least some of the following content.

S210: Send a first command to a charging device 110, the first command being used to control the charging device 110 to output an oscillation current to the battery 121 during a first time period 310 in a charging process, where the oscillation current includes n cycle periods 313, n being a positive integer greater than 1, each of the cycle periods 313 includes a first sub-period 311 and a second sub-period 312, a current output by the charging device 110 during the first sub-period 311 is a first current, a current output by the charging device 110 during the second sub-period 312 is a second current, and a direction of the first current is opposite to that of the second current.

S220: Send a second command to the charging device 110, the second command being used to instruct the charging device 110 to charge the battery 121 during the second time period 320 in the charging process.

The charging method for the battery 121 provided in this embodiment of this application is applicable to batteries 121 of multiple systems, not only to ion batteries 121, including but not limited to lithium-ion batteries 121, sodium-ion batteries 121, and potassium-ion batteries 121, but also to metal-based batteries 121, including but not limited to lithium-metal batteries 121, sodium-metal batteries 121, and potassium-metal batteries 121. In addition, the charging method is applicable to infinite negative batteries 121. For an infinite negative battery, a negative current collector is simply provided without coating a negative electrode active material during production. After charging is completed for the first time, metal from a positive electrode material is migrated to a surface of the negative electrode current collector to form a metal layer, and the metal layer serves as the negative electrode in the true sense. The charging method is also applicable to batteries 121 with different positive electrode materials, such as ternary batteries 121 and lithium iron batteries 121. In addition, for batteries 121 with a small ratio of anode capacity to cathode capacity, the foregoing charging method can also effectively reduce metal precipitation and remove dendrites generated in the charging process.

For ease of description, the battery 121 being a lithium-ion battery 121 is merely used as an example for description in this embodiment of this application.

When the battery 121 is about to start charging, the BMS 122 of the battery 121 may communicate with the charging device 110 to cause the charging device 110 to charge the battery 121 in a suitable charging mode. Specifically, the BMS 122 sends a first command to the charging device 110. The charging device 110 receives the first command and outputs an oscillation current to the battery 121 during the first time period 310 according to the first command. The BMS 122 sends a second command to the charging device 110. The charging device 110 receives the second command and charges the battery 121 during the second time period 320 according to the second command.

The first time period 310 is a period of time during which the charging device 110 outputs the oscillation current to the battery 121, which may be a period of time at the beginning of the entire charging duration, a period of time near the end of the entire charging duration, or a period of time in the middle of the entire charging duration. Throughout the charging process, one first time period 310 may be specified or a plurality of first time periods 310 may be specified. During the first time period 310, the quantity of electricity of the battery 121 barely increases to avoid causing large-scale fluctuations in the state of charge (SOC) of the battery and introducing precipitation of additional metal.

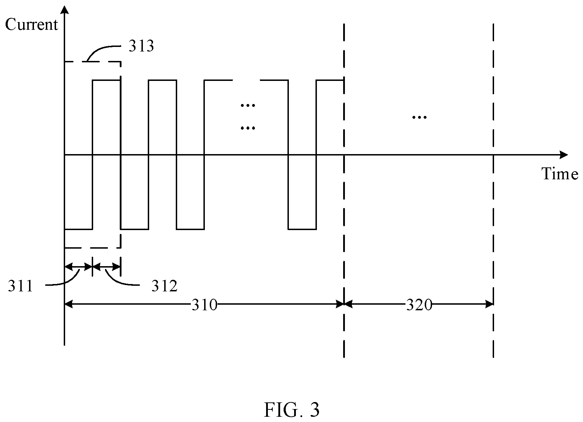

The charging process may be referred to the schematic diagram shown in FIG. 3. FIG. 3 is a schematic diagram of coordinates for magnitude of current and time, in which the charging process includes only one first time period 310 and one second time period 320 and the first time period 310 is the most beginning period of time in the entire charging process.

The second time period 320 is adjacent to the first time period 310. During the second time period 320, the charging device 110 charges the battery 121, and the quantity of electricity of the battery 121 gradually accumulates and grows to a fully charged state. During the second time period 320, the charging device 110 may charge the battery 121 in a variety of modes, for example using constant voltage charging, constant current charging, or charging modes that are flexibly adjusted according to the charging stage of the battery 121. The current versus time relation curves vary for different charging modes and therefore are not shown in FIG. 3.

The oscillation current may be a high frequency oscillation pulse current. As shown in FIG. 3, an oscillation current includes a plurality of cycle periods 313 within a first time period 310, and each cycle period 313 includes a first sub-period 311 and a second sub-period 312. A current output by the charging device 110 during the first sub-period 311 is a first current, a current output by the charging device 110 during the second sub-period 312 is a second current, and a direction of the first current is opposite to that the second current, which means that one of the first current and the second current is a charging current and that the other current is a discharging current.

The first current and the second current may be the same or not exactly identical in magnitude during a single cycle period 313. In a case of not exactly identical, it is necessary to ensure that the quantity of electricity charged and the quantity of electricity discharged within a single cycle period 313 are approximately the same and limited to prevent risks of causing large-scale fluctuation in the SOC and introducing precipitation of additional metal. For example, it is possible to make the quantity of electricity charged and the quantity of electricity discharged approximately the same by adjusting a duration of the first sub-period 311 and a duration of the second sub-period 312 in a case that the first current and the second current are not identical in magnitude. That is, the first sub-period 311 and the second sub-period 312 may alternatively not be exactly the same in magnitude within a single cycle period 313. In addition, the waveform of the oscillation current may include ladder, sawtooth, trigonometric, and other shapes, and the quantity of electricity charged is required to be approximately the same as the quantity of electricity discharged within a single cycle period 313 of a different waveform. FIG. 3 shows only one possible waveform and is not meant to limit the oscillation current waveform in this application.

A duration of the total cycle periods 313 of the oscillation current is a product of a duration of a single cycle period 313 times the number of the cycle periods 313, where the duration of the single cycle period 313 is related to the frequency of the oscillation current that can be output by the charging device 110, and the number n of the cycle periods 313 is related to charging conditions and performance of the battery 121 itself, n being a positive integer greater than 1.

Specifically, the duration of a single cycle period 313 is reciprocally related to the frequency of the oscillation current that can be output by the charging device 110, and the frequency of the oscillation current that can be output by the charging device 110 is determined by the capabilities of the charging device 110 itself. In a possible implementation, the frequency of the oscillation current is the maximum frequency that can be generated by the charging device 110. A higher frequency of the oscillation current indicates a shorter duration of a single cycle period 313 and a less quantity of electricity accumulated or released during the first sub-period 311 or the second sub-period 312, which can effectively avoid large fluctuations of SOC.

The number n of the cycle periods 313 is related to the charging conditions and the performance of the battery 121 itself. In terms of charging conditions, a lower temperature and a higher fast charge rate are more likely to cause lithium precipitation and a greater amount of lithium to be precipitated, and the oscillation current is needed for a longer duration to dissolve the lithium precipitated. In terms of the performance of the battery 121 itself, a longer service time of the battery 121 causes more serious aging of the battery 121 and a greater amount of lithium precipitated to be accumulated, and the oscillation current is also needed for a longer duration to dissolve the lithium precipitated. If the time used to remove lithium dendrites is too long, a total duration of the charging process is extended, bringing about poor user experience. Therefore, the number of the cycle periods 313 actually used is generally determined by taking the effect of removing the lithium precipitated and the duration of the charging process into account.

Generally, the number of the cycle periods 313 is determined experimentally and may be changed based on actual needs and experimental verification. When the number of the cycle periods 313 is determined experimentally, the frequency of the oscillation current may be determined based on the capability of the charging device 110, and then the number n of the cycle periods 313 may be changed experimentally to observe an improvement effect on lithium precipitation, and a suitable value of n is selected in consideration of balancing the improvement effect and a time spent. After the number n of the cycle periods 313 is determined, the value of n may be sent to the charging device 110 when the BMS 122 communicates with the charging device 110 in the charging process, causing the charging device 110 to provide the oscillation current with n cycle periods 313; or, the value of n may be set directly in a unit of the charging device 110 for providing oscillation current, and then the charging device 110 outputs oscillation current of n cycle periods 313 to the battery 121 when outputting the oscillation current to the battery 121.

With the charging method provided in this application, the lithium precipitated on the negative electrode in the charging process can be dissolved, which makes tips of lithium dendrites smooth or even disappear, so that a short circuit in a battery cell caused by the lithium dendrites growing to a certain extent and piercing through a separator between a positive electrode and a negative electrode can be avoided, ensuring the safety performance of the battery 121. This charging method can also play a better role in removing the lithium precipitated from the battery 121 that has already experienced lithium precipitation.

According to some embodiments of this application, optionally, the charging process includes at least one first time period 310 and at least one second time period 320.

At any time in the charging process, the BMS 122 may send a first command to the charging device 110 to cause the charging device 110 to output an oscillation current to the battery 121, and the charging process is divided into multiple time periods by the first time period 310. Specifically, under the condition that the charging process includes a first time period 310, if the first time period 310 is a period of time at the beginning or near the end of the entire charging duration, the remaining duration of the charging process is a second time period 320, which means that the charging process includes a first time period 310 and a second time period 320; and if the first time period 310 is a period of time in the middle of the entire charging duration, the remaining duration of the charging process is divided into two parts by the first time period 310, both of which are the second time period 320, which means that the charging process includes one first time period 310 and two second time periods 320. By analogy, under the condition that the charging process includes a plurality of first time periods 310, the remaining duration of the charging process is divided into a plurality of second time periods 320 by the plurality of first time periods 310, and then the charging process may include the plurality of first time periods 310 and a plurality of second time periods 320.

In this way, the lithium precipitated can be removed more flexibly in the charging process, and the BMS 122 can select a most favorable charging strategy for the battery 121 at a different stage of the charging process, that is, remove the lithium dendrites for the battery 121 to the greatest extent by removing lithium precipitated in different ways to ensure the safety performance of the battery 121.

According to some embodiments of this application, optionally, the first current is a charging current of the battery 121 and the second current is a discharging current of the battery 121, and a quantity of electricity charged with the first current during the first sub-period 311 is less than or equal to a quantity of electricity discharged with the second current during the second sub-period 312.

In order to avoid introducing precipitation of additional metal in the process of removing the lithium precipitated, the magnitudes of the first current and the second current generally needs to be controlled below a magnitude of current specified in the lithium precipitation window. The lithium precipitation window shows the relationship between the maximum charging current without lithium precipitation and the SOC of the battery 121 at a specified temperature. A larger SOC indicates that the lithium precipitation is more likely to occur and that a maximum allowable charging current is lower. That is, when the SOC changes, the maximum charging current specified in the lithium precipitation window also changes. If the oscillation current in a single cycle period 313 increases the quantity of electricity of the battery 121, while the oscillation current is still output to the battery 121 with the same magnitude of the first current and the second current in the next cycle period 313, it is easy to produce additional metal precipitation. Therefore, the quantity of electricity charged should be less than or equal to the quantity of electricity discharged within a single cycle period 313. In other words, under the condition that the first current is the charging current of the battery 121 and the second current is the discharging current of the battery 121, the quantity of electricity charged with the first current during the first sub-period 311 is less than or equal to the quantity of electricity discharged with the second current during the second sub-period 312.

Specifically, there are various ways through which the quantity of electricity charged with the first current during the first sub-period 311 may be made to be less than or equal to the quantity of electricity discharged with the second current during the second sub-period 312. For example, under the condition that the first current and the second current are identical in magnitude, a duration of the first sub-period 311 may be shorter than or equal to a duration of the second sub-period 312; or, under the condition that the duration of the first sub-period 311 is equal to the duration of the second sub-period 312, the first current is slightly less than the second current in magnitude; or alternatively, the first current is slightly greater than the second current in magnitude, then the duration of the first sub-period 311 needs to be shorter than the duration of the second sub-period 312.

In another possible implementation, the quantity of electricity charged may be slightly greater than the quantity of electricity discharged, and this implementation requires that the accumulation of electricity in battery 121 during the first time period 310 cannot cause large-scale fluctuation in the SOC and need to be limited to prevent precipitation of additional metal.

Lithium precipitation often occurs in the charging process. Therefore, during the first time period 310, the quantity of electricity charged being less than or equal to the quantity of electricity discharged can avoid generation of new lithium dendrites in removal of lithium dendrites, thereby improving the effect of removing the lithium dendrites during the first time period 310 to ensure the safety performance of the battery 121. In addition, if large-scale fluctuations in the SOC of the battery 121 occurs, the lithium precipitation window changes accordingly, and a magnitude of the oscillation current during the first time period 310 needs to change accordingly to avoid exceeding a corresponding maximum current in the lithium precipitation window. Thus, the quantity of electricity charged being basically equal to the quantity of electricity discharged can prevent large-scale fluctuations in the SOC of the battery 121 so that the oscillation current can always maintain a same magnitude of current output during the first time period 310, simplifying the process of removing the lithium precipitated and avoiding complex current regulation strategies.

According to some embodiments of this application, optionally, a duration of the first sub-period 311 is shorter than or equal to a duration of the second sub-period 312.

Under the condition that the first current is a charging current and the second current is a discharging current, the duration of the first sub-period 311 being shorter than or equal to the duration of the second sub-period 312 can ensure that the quantity of electricity charged is less than the quantity of electricity discharged under the condition of a slight error between the first current and the second current in magnitude. In this embodiment of this application, the quantity of electricity charged and the quantity of electricity discharged are as equal as possible, so that the duration of the first sub-period 311 should be not much shorter than the duration of the second sub-period 312.

This ensures that the quantity of electricity charged is less than or equal to the quantity of electricity discharged to avoid generation of new lithium dendrites in removal of lithium dendrites, thereby improving the effect of removing the lithium dendrites during the first time period 310 to ensure the safety performance of the battery 121. In addition, this also avoids the large-scale fluctuations in the SOC of the battery 121 during the first time period 310 in the charging process so that the oscillation current can always be output as a current of a same magnitude during the first time period 310, simplifying the process of removing the lithium precipitated and avoiding complex current regulation strategies.

According to some embodiments of this application, optionally, the method 200 further includes: receiving a maximum output frequency of the charging device 110 sent by the charging device 110; and determining a duration of the cycle period 313 based on the maximum output frequency.

Since the frequency of the oscillation current output by the charging device 110 to the battery 121 is related to the maximum frequency that can be output by the charging device 110 itself, the BMS 122 needs to obtain the maximum output frequency that can be output by the charging device 110, to determine a duration of a single cycle period 313 in the actual charging process. Specifically, if the maximum output frequency that can be output by the charging device 110 is *f,* the duration of the single cycle period 313 is $t = \frac{1}{f}$ , and the duration of the first sub-period 311 and the second sub-period 312 may be $t' = \frac{1}{2f}$ . In one possible implementation, the frequency of the oscillation current actually output by the charging device 110 may be less than the maximum output frequency of the charging device 110, *f* is the frequency actually output by the charging device 110, and the actual duration of a single cycle period 313 may still be calculated according to the foregoing formula.

The BMS 122 determines a duration of the cycle period 313 required for the battery 121 based on the maximum output frequency of the charging device 110, and develops reasonable charging strategies for the battery 121. The BMS 122 can send a charging strategy to the charging device 110, and the charging device 110 outputs an oscillation current to the battery 121 according to an instruction from the BMS 122 and charges the battery 121.

A shorter duration of the cycle period 313 indicates that less fluctuations in the quantity of electricity of the battery 121 may occur during a single cycle period 313 and that the effect on removing the lithium dendrites during the first time period 310 is better. Considering the capability of the charging device 110, the BMS 122 determines the duration of the cycle period 313 based on the maximum output frequency of the charging device 110 and can develop reasonable oscillation current parameters and remove the lithium metal precipitated and lithium dendrites from the battery 121 with that oscillation current. This can better dissolve the lithium precipitated on the negative electrode, making tips of the lithium dendrites smooth or even disappear, so that a short circuit in a battery cell caused by the lithium dendrites growing to a certain extent and piercing through a separator between a positive electrode and a negative electrode can be avoided, ensuring the safety performance of the battery 121.

According to some embodiments of this application, optionally, the first sub-period 311 and/or the second sub-period 312 is 2 ms.

In one possible implementation, the durations of both the first sub-period 311 and the second sub-period 312 may be set to 2 ms. Then, in this case, the maximum output frequency that can be output by the charging device 110 is required to be greater than or equal to 250 Hz. In another possible implementation, one of the first sub-period 311 and the second sub-period 312 is 2 ms and the other may be, for example, 3 ms. Optionally, it may be that the sub-period of the charging current is 2 ms and that the sub-period of the discharging current is 3 ms.

Shorter durations of the first sub-period 311 and the second sub-period 312 require a higher maximum output frequency that can be output by the charging device 110 and a higher cost of providing a compliant charging device 110. A too-small sub-period value is likely to cause the charging device 110 to be unable to fulfill its capability, while a too-large sub-period value is likely to cause large-scale fluctuations in the SOC during the first sub-period 311 or the second sub-period 312, affecting the effect on removing the lithium dendrites. Therefore, appropriate values for the first sub-period 311 and the second sub-period 312 may help to achieve a better effect on removing the lithium dendrites, avoid lithium precipitation when the battery 121 is charged, and ameliorate a situation to some extent in which the battery 121 already has lithium precipitated.

According to some embodiments of this application, optionally, the number n of the cycle periods 313 is 10,000.

The cycle period 313 is generally determined experimentally and is related to the SOC and state of health (state of health, SOH) of the battery 121. In order to provide a good way to remove the lithium precipitated and reduce the dendrites in a wide range for the battery 121, n is set to 10,000 in this embodiment of this application.

This value is suitable for a variety of states of the battery 121 and can have a good effect on removing the lithium precipitated and reducing the dendrites. It has been experimentally verified that thickness of a lithium precipitation zone in the battery 121 can be significantly reduced after 10,000 cycles, which is conducive to extending the life of the battery 121 and reducing safety risks during use of the battery 121.

According to some embodiments of this application, optionally, the method 200 further includes: obtaining a state of charge SOC and a state of health SOH of the battery 121; and determining a maximum magnitude of the first current and/or the second current based on the SOC and SOH.

The magnitudes of the oscillation current should be less than the maximum magnitudes of current corresponding to the lithium precipitation window of the battery 121 in different states, and the lithium precipitation window has a correlation with the SOC and SOH of the battery 121.

SOC refers to the state of charge of the battery 121. For example, a SOC of 100% means that the battery 121 is in a fully charged state, and a SOC of 0% means that the battery 121 is in a fully discharged state.

SOH refers to the state of health of the battery 121, and generally, SOH may be defined in terms of the capacity of the battery 121 or the quantity of electricity of the battery 121. For example, SOH may be a percentage of a current capacity of the battery 121 to a rated capacity of the battery 121, or may be a percentage of a maximum quantity of electricity discharged of a current battery 121 to a maximum quantity of electricity discharged of a new battery 121. SOH is generally related to information such as operating conditions and a service life of the battery 121, and the aging state of the battery 121 may be determined based on a value of SOH. For example, when the SOH of the battery 121 meets SOH ≥ 95%, the battery 121 can be considered as a lightly aged battery 121; when the SOH of the battery 121 meets 85% ≤ SOH < 95%, the battery 121 can be considered as a moderately aged battery 121; and when the SOH of the battery 121 meets SOH < 85%, the battery 121 can be considered as a heavily aged battery 121. The foregoing classification criteria are for example only, and the aging degree of battery 121 may alternatively be classified in other ways.

The different aging states of the battery 121 trigger changes in the lithium precipitation window, and the magnitude of the oscillation current output by the charging device 110 during the first time period 310 also changes with the change in the lithium precipitation window. Table 1 shows the magnitude of the oscillation current designed according to the SOC and SOH of the battery 121, and the data in Table 1 is provided as an example only.

**Table 1**

| SOH \ SOC | 0%–20% | 30%–40% | 50% | 60% | 70% | 80% | 85% | 90% | 97% |
|---|---|---|---|---|---|---|---|---|---|
| SOH = 100% | 4.2C | 3.2C | 2.2C | 1.2C | 0.8C | 0.6C | 0.4C | 0.3C | 0.1C |
| 95% ≤ SOH < 100% | 4.1C | 3.1C | 2.1C | 1.1C | 0.7C | 0.5C | 0.3C | 0.25C | 0.05C |
| 85% ≤ SOH < 95% | 4.0C | 3.0C | 2.0C | 1.0C | 0.6C | 0.4C | 0.25C | 0.2C | 0.04C |
| SOH < 85% | 3.8C | 2.8C | 1.8C | 0.8C | 0.4C | 0.25C | 0.2C | 0.1C | 0.03C |

where C refers to a magnitude of current by which full capacity of the battery 121 can be completely released within 1 hour, and the number in front of C refers to a rate.

For example, if the BMS 122 detects that the battery 121 currently has a SOH of 90% and a SOC of 35%, it can be determined according to Table 1 that the maximum magnitude of an oscillation current output by the charging device 110 should be 3.0C. To be specific, the battery 121 is a moderately aged battery 121 by aging of the battery 121, the current remaining capacity is 35%, and 1C is the magnitude of current that can release the full capacity of the battery 121 within 1 hour. Then, when the charging device 110 outputs an oscillation current to the battery 121, a maximum magnitude of the oscillation current is 3.0 times the magnitude in 1C. In addition, the charging device 110 may output the oscillation current to the battery 121 in combination with the duration of the cycle period 313 and the number of the cycle periods 313. Still using an example that the battery 121 currently has a SOH of 90% and a SOC of 35%, relevant parameters of the oscillation current output by the charging device 110 may be specifically as follows: The magnitudes of both the first current and the second current are 3.0C, both the first sub-period 311 and the second sub-period 312 are 2 ms, and the number of cycles is 10,000.

One of the first current and the second current is a charging current and the other one is a discharging current, and the two currents may have a same magnitude. In this way, when a magnitude of current is determined for one current according to the foregoing method, both the first current and the second current are of that magnitude. The first current and the second current may alternatively be different in magnitude. In this case, a parameter cross-reference table may be designed for the first current and the second current, respectively, and a magnitude of the first current and a magnitude of the second current can be determined separately with different correspondences.

Since in the oscillation current waveform shown in FIG. 3, the first current is constant during the first sub-period 311 and the second current is also constant during the second sub-period 312, the maximum magnitudes of the first current and the second current determined according to the foregoing method are the actual magnitudes of the two currents in their corresponding sub-periods. When the waveform of the oscillation current is of another shape, for example, sawtooth, trigonometric, or another waveform that varies with time, the magnitude of current determined according to the foregoing method is the maximum magnitude of current within one sub-period.

Under the condition that the charging process includes multiple first time periods 310, before start of each first time period 310, the BMS 122 needs to determine the maximum magnitude of the first current and/or the second current based on the SOC and SOH of the battery 121 at the current moment.

The BMS 122 determines the maximum magnitude of the oscillation current by taking into account the SOC and SOH of the battery 121, which can avoid precipitation of additional metal caused by the magnitude of the oscillation current exceeding the corresponding magnitude of current in the current lithium precipitation window of the battery 121, helping the oscillation current to remove the lithium metal precipitated in the charging process within a suitable range, and can also remove the lithium metal already precipitated in the battery 121 to some extent, ensuring the safety performance of the battery 121.

According to some embodiments of this application, optionally, the first command includes a maximum magnitude of the first current and/or the second current.

The BMS 122 determines the maximum magnitude of the first current and/or the second current that the battery 121 can receive in its current state based on the SOC and SOH, and sends the magnitude of current to the charging device 110. The maximum magnitude of the first current and/or the second current may be sent to the charging device 110 separately or may be in a first command carrying information about the maximum magnitude of the first current and/or the second current. After receiving the first command, the charging device 110 outputs to the battery 121 an oscillation current at the magnitude of current indicated in the first command.

The BMS 122 sends the maximum magnitude of the oscillation current to the charging device 110 while instructing the charging device 110 to output the oscillation current to the battery 121, which can improve the efficiency of the communication between the BMS 122 and the charging device 110 and ensure that the charging device 110 outputs the oscillation current at a suitable magnitude to the battery 121 to avoid the precipitation of additional metal, ensuring the safety performance of the battery 121.

According to some embodiments of this application, optionally, the sending a first command to a charging device 110 includes: sending the first command to the charging device 110 when the battery 121 is connected to the charging device 110.

Before communicating with the charging device 110, the BMS 122 may detect whether the battery 121 is successfully connected to the charging device 110. If the connection point between a circuit of the battery 121 and a circuit of the charging device 110 has not yet been connected or has poor contact, even if the BMS 122 is in communication with the charging device 110, an oscillation current cannot be output to the battery 121 properly, or a potential safety hazard may even arise in the charging process.

It is possible to detect whether the battery 121 is connected to the charging device 110 in various manners. In a possible manner, for example, whether the battery 121 and the charging device 110 are successfully connected may be determined by detecting a voltage across two ends of a connection point between the circuit of the battery 121 and the circuit of the charging device 110. Under the condition that the battery 121 is connected to the charging device 110, the BMS 122 sends a first command to the charging device 110. The charging device 110 that received the first command may output an oscillation current to the battery 121 as indicated in the first command, that is, to cause the oscillation current to be output from the charging device 110 to the battery 121 by connecting the circuits of the battery 121 and the charging device 110.

Making sure that the battery 121 is properly connected to the charging device 110 before proceeding with charging may ensure that the oscillation current output by the charging device 110 and the charging current during the second time period 320 can flow properly through the battery 121, so as to avoid charging faults and ensure the safety performance of the battery 121 in the charging process while improving the charging efficiency.

According to some embodiments of this application, optionally, sending a first command to a charging device 110 includes: sending the first command to the charging device 110 when it is determined that the battery 121 meets at least one of the following conditions: a temperature of the battery 121 is less than or equal to a first threshold; the battery 121 is being charged in a fast charging mode, the fast charging mode being a charging mode with a charging speed greater than or equal to a second threshold; and the battery 121 has completed x cycles of charging and discharging; the battery 121 has lost y% of its capacity; and the battery 121 has been in service for z days, where both x and z are positive integers and y is a positive number.

Before the BMS 122 communicates with the charging device 110, the BMS 122 may also detect the state of the battery 121 to determine whether an oscillation current needs to be introduced in the charging process to remove the lithium metal precipitated.

Optionally, when the temperature of the battery 121 is low, the ability of an electrolyte to migrate ions becomes weaker and lithium ions cannot be embedded into a negative electrode in a timely manner in the charging process, which is more likely to cause lithium precipitation on a surface of the negative electrode. Therefore, when the temperature of the battery 121 is less than or equal to the first threshold, a first command may be sent to the charging device 110, instructing the charging device 110 to output an oscillation current. This can heat up the battery 121 and improve the ability of the electrolyte to migrate ions through the high-frequency oscillation current, and make use of the oscillation current to remove the lithium metal already precipitated in the battery 121.

Optionally, a variety of charging modes can be set for the battery 121, such as normal mode and fast charging mode. The fast charging mode generally refers to a charging mode that makes charging faster than other charging modes by controlling the charging process and parameters such as the charging current, where the charging speed may be greater than or equal to a second threshold. In the fast charging mode, the charging current is generally larger, which may likely make lithium ions deintercalated from a positive electrode unable to be embedded into a negative electrode in a timely manner and cause lithium precipitation on a surface of the negative electrode. When determining that the battery 121 is being charged in a fast charging mode, the BMS 122 may instruct the charging device 110 to output an oscillation current to the battery 121, to remove the lithium metal already precipitated and the lithium metal precipitated in the charging process in the battery 121.

Optionally, the BMS 122 may also determine, based on the number of cycles that the battery 121 has completed charging and discharging, a percentage of capacity loss of the battery 121, or the number of days for which the battery 121 has been in service, whether setting an oscillation current is needed in the charging process to remove the lithium metal already precipitated and lithium metal precipitated in the charging process in the battery 121. If the battery 121 has completed x cycles of charging and discharging, the battery 121 has lost y% of its capacity, or the battery 121 has been in service for z days, each of these can be understood as the battery 121 having been used for a period of time and a certain amount of lithium metal having already accumulated on the negative electrode of the battery 121. Therefore, introduction of the oscillation current in the charging process can remove this part of the lithium metal already precipitated and have an inhibitory effect on the lithium precipitated in the charging process. Both x and z are positive integers and y is a positive number.

The charging device 110 is instructed to output an oscillation current to the battery 121 when it is determined that the battery 121 meets at least one of the foregoing conditions, which allows oscillation current resources to be reasonably used and prevents the charging device 110 from still outputting an oscillation current to a battery 121 that is a new battery 121, thereby improving charging efficiency and reducing charging time. In addition, outputting an oscillation current to the battery 121 that has been used to a certain extent can effectively use the oscillation current to remove the lithium metal precipitated, improving the effect of the oscillation current in removing the lithium metal and ensuring the safety performance of the battery 121.

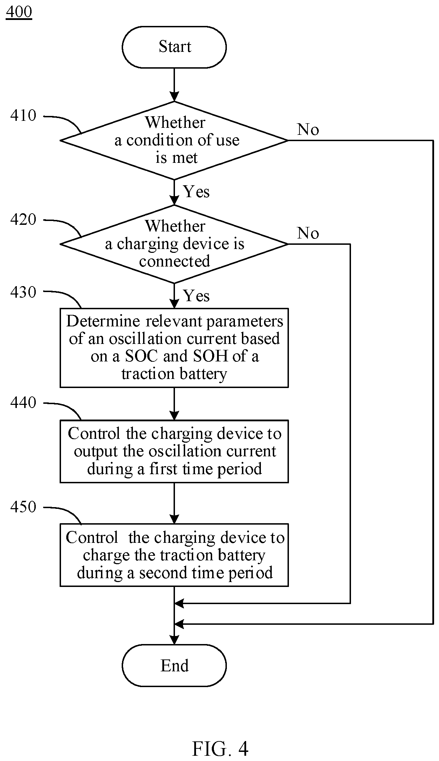

In another optional implementation, the charging method provided in this embodiment of this application may include a process 400 shown in FIG. 4, which process 400 may include at least some of the following content.

410. ABMS 122 determines whether a usage state of the battery 121 meets a condition for using an oscillation current, such as a temperature of the battery 121, a charging mode, and time in service. If not, no oscillation current may be used in the charging process of the battery 121, and the charging device 110 charges the battery 121 in a conventional charging manner. If yes, step 420 is performed.

420. The BMS 122 determines whether a charging circuit of the battery 121 is connected to the charging device 110, or, alternatively, the BMS 122 checks whether a connection between the charging circuit of the battery 121 and the charging device 110 is in a state in which safe charging can be performed. If not, no charging operation is performed on the battery 121. Further, a reminder may be issued, and the charging process may be performed after troubleshooting of the connection between the battery 121 and the charging device 110 is completed. If yes, step 430 is performed.

430. The BMS 122 determines relevant parameters of the oscillation current based on the SOC and SOH of the battery 121, where the relevant parameters may include a maximum magnitude of the oscillation current, cycle periods 313, a number of cycles, and the like.

440. The BMS 122 controls the charging device 110 to output the oscillation current during the first time period 310. For example, the BMS 122 may send a first command to the charging device 110, and the first command may carry the relevant parameters determined in step 430. After receiving the first command, the charging device 110 outputs a corresponding oscillation current to the battery 121 as indicated in the first command.

450. The BMS 122 controls the charging device 110 to charge the battery 121 during the second time period 320. For example, the BMS 122 may send a second command to the charging device 110, and the second command may instruct the charging device 110 to charge the battery 121 in a conventional charging manner after outputting the oscillation current. The second command may be sent simultaneously with the first command, or the second command may be sent after the first time period 310 has ended.

By introducing high-frequency oscillation current during charging, the metal precipitated on the negative electrode in the charging process can be dissolved, which makes tips of metal dendrites smooth or even disappear, so that a short circuit in a battery cell caused by the dendrites growing to a certain extent and piercing through a separator between a positive electrode and a negative electrode can be avoided, ensuring the safety performance of the battery 121. In addition, the charging method provided in this application can also remove the precipitated metal already present on the negative electrode to a certain extent, which is conducive to extending the life of the battery 121 and reducing safety risk during the use of battery 121.

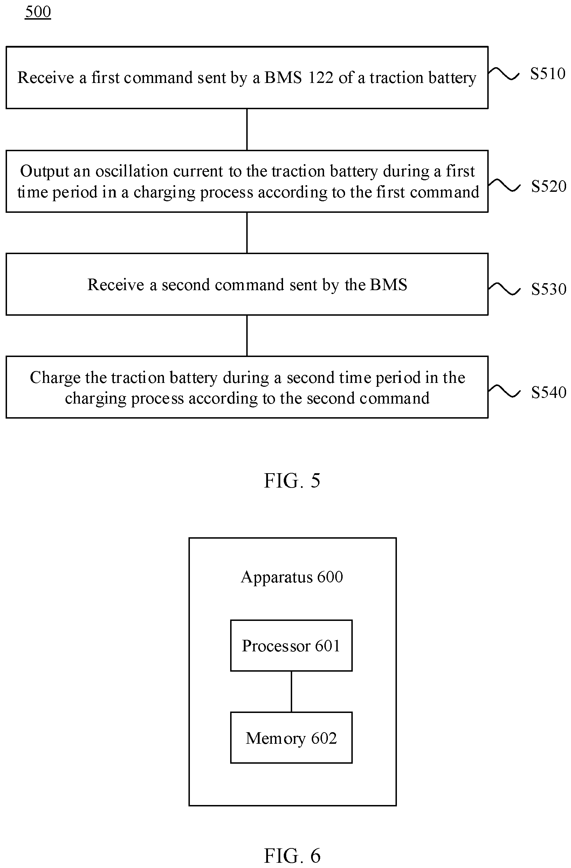

This application further provides a charging method 500 for a battery 121, as shown in FIG. 5. The method 500 may be applied to a charging device 110, which means that the method 500 may be performed by the charging device 110 in FIG. 1. The method 500 may include at least some of the following content.

S510: Receive a first command sent by a BMS 122 of the battery 121.

S520: Output an oscillation current to the battery 121 during a first time period 310 in a charging process according to the first command, where the oscillation current includes n cycle periods 313, n being a positive integer greater than 1, each of the cycle periods 313 includes a first sub-period 311 and a second sub-period 312, a current output during the first sub-period 311 is a first current, a current output during the second sub-period 312 is a second current, and a direction of the first current is opposite to that of the second current.

S530: Receive a second command sent by the BMS 122.

S540: Charge the battery 121 during the second time period 320 in the charging process according to the second command.

According to some embodiments of this application, optionally, the charging process includes at least one first time period 310 and at least one second time period 320.

According to some embodiments of this application, optionally, the first current is a charging current of the battery 121 and the second current is a discharging current of the battery 121, and a quantity of electricity charged with the first current during the first sub-period 311 is less than or equal to a quantity of electricity discharged with the second current during the second sub-period 312.

According to some embodiments of this application, optionally, a duration of the first sub-period 311 is shorter than or equal to a duration of the second sub-period 312.

According to some embodiments of this application, optionally, the method 500 further includes: sending a maximum output frequency of the charging device 110 to the BMS 122, the maximum output frequency being used to determine a duration of the cycle period 313.

According to some embodiments of this application, optionally, the first sub-period 311 and/or the second sub-period 312 is 2 ms.

According to some embodiments of this application, optionally, the number n of the cycle periods 313 is 10,000.

According to some embodiments of this application, optionally, the first command includes a maximum magnitude of the first current and/or the second current, the maximum magnitude of the first current and/or the second current being determined based on a state of charge, SOC, and a state of health, SOH, of the battery 121.

According to some embodiments of this application, optionally, the receiving a first command sent by a BMS 122 of the battery 121 includes: receiving the first command sent by the BMS 122 of the battery 121 when the battery 121 is connected to the charging device 110.

This application further provides a battery management system for performing the method described in any of the foregoing embodiments performed by the BMS 122.

This application further provides a battery including the foregoing battery management system.

This application further provides a charging device for performing the method described in any of the foregoing embodiments performed by the charging device 110 in the foregoing embodiments.

This application further provides a computer readable storage medium, where the computer readable storage medium stores a computer program, and when the computer program is run, the method as described in any of the foregoing embodiments is performed.

This application further provides an apparatus 600 for charging, including a processor 601 and a memory 602, where the memory 602 stores instructions, and when the instructions are run by the processor 601, the apparatus 600 is enabled to perform the method as described in any of the foregoing embodiments.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1. A charging method, applied to a battery management module of a battery and comprising:

   sending a first command to a charging device, the first command being used to control the charging device to output an oscillation current to the battery during a first time period in a charging process, wherein the oscillation current comprises n cycle periods, n being a positive integer greater than 1, each of the cycle periods comprises a first sub-period and a second sub-period, a current output by the charging device during the first sub-period is a first current, a current output by the charging device during the second sub-period is a second current, and a direction of the first current is opposite to that of the second current; and
   sending a second command to the charging device, the second command being used to instruct the charging device to charge the battery during a second time period in the charging process.

2. The charging method according to claim 1, **characterized in that** the charging process comprises at least one first time period and at least one second time period.

3. The charging method according to claim 1 or 2, **characterized in that** the first current is a charging current of the battery, the second current is a discharging current of the battery, and a quantity of electricity charged with the first current during the first sub-period is less than or equal to a quantity of electricity discharged with the second current during the second sub-period.

4. The charging method according to claim 3, **characterized in that** a duration of the first sub-period is shorter than or equal to a duration of the second sub-period.

5. The charging method according to any one of claims 1 to 4, **characterized in that** the method further comprises:

   receiving a maximum output frequency of the charging device sent by the charging device; and
   determining a duration of the cycle period based on the maximum output frequency.

6. The charging method according to any one of claims 1 to 5, **characterized in that** the first sub-period and/or the second sub-period is 2 ms.

7. The charging method according to any one of claims 1 to 6, **characterized in that** a number n of the cycle periods is 10000.

8. The charging method according to any one of claims 1 to 7, **characterized in that** the method further comprises:

   obtaining a state of charge, SOC, and a state of health, SOH, of the battery; and
   determining a maximum magnitude of the first current and/or the second current based on the SOC and the SOH.

9. The charging method according to claim 8, **characterized in that** the first command comprises a maximum magnitude of the first current and/or the second current.

10. The charging method according to any one of claims 1 to 9, **characterized in that** the sending a first command to a charging device comprises:
    sending the first command to the charging device when the battery is connected to the charging device.

11. The charging method according to any one of claims 1 to 10, **characterized in that** the sending a first command to a charging device comprises:
    sending the first command to the charging device when it is determined that the battery meets at least one of the following conditions:

    a temperature of the battery is less than or equal to a first threshold;
    the battery is being charged in fast charging mode, the fast charging mode being a charging mode with a charging speed greater than or equal to a second threshold;
    the battery has completed x cycles of charging and discharging, x being a positive integer;
    the battery has lost y% of its capacity, y being a positive number; and
    the battery has been in service for z days, z being a positive integer.

12. A charging method, applied to a charging device and comprising:

    receiving a first command sent by a battery management module of a battery;
    outputting an oscillation current to the battery during a first time period in a charging process according to the first command, wherein the oscillation current comprises n cycle periods, n being a positive integer greater than 1, each of the cycle periods comprises a first sub-period and a second sub-period, a current output during the first sub-period is a first current, a current output during the second sub-period is a second current, and a direction of the first current is opposite to that of the second current;
    receiving a second command sent by the battery management module; and
    charging the battery during a second time period in the charging process according to the second command.

13. The charging method according to claim 12, **characterized in that** the charging process comprises at least one first time period and at least one second time period.

**14.** The charging method according to claim 12 or 13, **characterized in that** the first current is a charging current of the battery, the second current is a discharging current of the battery, and a quantity of electricity charged with the first current during the first sub-period is less than or equal to a quantity of electricity discharged with the second current during the second sub-period.

**15.** The charging method according to any one of claims 12 to 14, **characterized in that** a duration of the first sub-period is shorter than or equal to a duration of the second sub-period.

**16.** The charging method according to any one of claims 12 to 15, **characterized in that** the method further comprises: sending a maximum output frequency of the charging device to the battery management module, the maximum output frequency being used to determine a duration of the cycle period.

**17.** The charging method according to claim 16, **characterized in that** the first sub-period and/or the second sub-period is 2 ms.

**18.** The charging method according to any one of claims 12 to 17, **characterized in that** a number n of the cycle periods is 10000.

**19.** The charging method according to any one of claims 12 to 18, **characterized in that** the first command comprises a maximum magnitude of the first current and/or the second current, the maximum magnitude of the first current and/or the second current being determined based on a state of charge, SOC, and a state of health, SOH, of the battery.

**20.** The charging method according to any one of claims 12 to 19, **characterized in that** the receiving a first command sent by a battery management module of a battery comprises:
receiving the first command sent by the battery management module of the battery when the battery is connected to the charging device.

**21.** A battery management system, configured to perform the method according to any one of claims 1 to 11.

**22.** A battery, **characterized by** comprising:
the battery management system according to claim 21.

**23.** A charging device, configured to perform the method according to any one of claims 12 to 20.

100

FIG. 1

200

FIG. 2

FIG. 3

400

```
                    ┌──────────────┐
                    │    Start     │
                    └──────┬───────┘
                           │
                           ▼
410 ──╮          ╱◇◇◇◇◇◇◇◇◇◇◇◇◇◇◇◇╲
      │         ╱    Whether        ╲        No
                ◇  a condition of use ◇───────────────────────────────╮
                 ╲    is met        ╱                                  │
                  ╲◇◇◇◇◇◇◇◇◇◇◇◇◇◇◇╱                                    │
                           │ Yes                                       │
                           ▼                                           │
420 ──╮          ╱◇◇◇◇◇◇◇◇◇◇◇◇◇◇◇◇╲                                   │
      │         ╱    Whether        ╲        No                        │
                ◇  a charging device is ◇──────────────╮              │
                 ╲    connected     ╱                   │              │
                  ╲◇◇◇◇◇◇◇◇◇◇◇◇◇◇╱                     │              │
                           │ Yes                         │              │
                           ▼                             │              │
430 ──╮   ┌─────────────────────────────┐              │              │
      │   │ Determine relevant parameters│              │              │
          │ of an oscillation current based│            │              │
          │   on a SOC and SOH of a       │             │              │
          │     traction battery          │             │              │
          └──────────────┬──────────────┘              │              │
                           ▼                             │              │
440 ──╮   ┌─────────────────────────────┐              │              │
      │   │ Control the charging device to│             │              │
          │ output the oscillation current │            │              │
          │   during a first time period  │             │              │
          └──────────────┬──────────────┘              │              │
                           ▼                             │              │
450 ──╮   ┌─────────────────────────────┐              │              │
      │   │ Control  the charging device to│            │              │
          │ charge the traction battery    │            │              │
          │  during a second time period  │             │              │
          └──────────────┬──────────────┘              │              │
                           ▼◄─────────────────────────╯              │
                           ◄─────────────────────────────────────────╯
                           ▼
                    ┌──────────────┐
                    │     End      │
                    └──────────────┘
```

FIG. 4

500

| Receive a first command sent by a BMS 122 of a traction battery | ∿ S510 |

| Output an oscillation current to the traction battery during a first time period in a charging process according to the first command | ∿ S520 |

| Receive a second command sent by the BMS | ∿ S530 |

| Charge the traction battery during a second time period in the charging process according to the second command | ∿ S540 |

FIG. 5

Apparatus 600

Processor 601

Memory 602

FIG. 6

**INTERNATIONAL SEARCH REPORT**

| International application No. |
| --- |
| **PCT/CN2022/093840** |

**A. CLASSIFICATION OF SUBJECT MATTER**

H02J 7/00(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS; VEN; CNTXT; USTXT; WOTXT; EPTXT; CNKI; IEEE: 电池, 充电, 放电, 周期, 振荡电流, 输出, battery, charge, discharge, cycle, oscillating current, output

**C. DOCUMENTS CONSIDERED TO BE RELEVANT**

| Category* | Citation of document, with indication, where appropriate, of the relevant passages | Relevant to claim No. |
| --- | --- | --- |
| X | CN 111564672 A (QINGDAO NENGFENG ELECTRIC CO., LTD.) 21 August 2020 (2020-08-21) description, paragraphs 4-48, and figures 1-4 | 1-23 |
| X | CN 107394294 A (ZHEJIANG GODSEND POWER TECHNOLOGY CO., LTD.) 24 November 2017 (2017-11-24) description, paragraphs 97-273, and figures 1-35b | 1-23 |
| X | CN 114069070 A (SVOLT ENERGY TECHNOLOGY CO., LTD.) 18 February 2022 (2022-02-18) description, paragraphs 6-93, and figures 1-5 | 1-23 |
| X | JP 2019117685 A (ZHEJIANG GODSEND POWER TECHNOLOGY CO., LTD.) 18 July 2019 (2019-07-18) description, paragraphs 39-113, and figures 1-35b | 1-23 |
| A | CN 113650486 A (EVERGRANDE HENGCHI NEW ENERGY AUTOMOBILE RESEARCH INSTITUTE (SHANGHAI) CO., LTD.) 16 November 2021 (2021-11-16) entire document | 1-23 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 January 2023** | **19 January 2023** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/093840** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 212162009 U (QINGDAO NENGFENG ELECTRIC CO., LTD.) 15 December 2020 (2020-12-15) <br> entire document | 1-23 |

Form PCT/ISA/210 (second sheet) (January 2015)

**INTERNATIONAL SEARCH REPORT**
Information on patent family members

International application No.

**PCT/CN2022/093840**

| Patent document cited in search report | | | Publication date (day/month/year) | Patent family member(s) | | | Publication date (day/month/year) |
|---|---|---|---|---|---|---|---|
| CN | 111564672 | A | 21 August 2020 | CN | 111564672 | B | 24 June 2022 |
| CN | 107394294 | A | 24 November 2017 | KR | 20190010400 | A | 30 January 2019 |
| | | | | WO | 2019015007 | A1 | 24 January 2019 |
| | | | | JP | 2019021608 | A | 07 February 2019 |
| | | | | EP | 3432439 | A1 | 23 January 2019 |
| | | | | US | 2019027792 | A1 | 24 January 2019 |
| | | | | CN | 107394294 | B | 04 September 2018 |
| | | | | US | 10256512 | B2 | 09 April 2019 |
| | | | | EP | 3432439 | B1 | 28 April 2021 |
| CN | 114069070 | A | 18 February 2022 | None | | | |
| JP | 2019117685 | A | 18 July 2019 | None | | | |
| CN | 113650486 | A | 16 November 2021 | None | | | |
| CN | 212162009 | U | 15 December 2020 | None | | | |

Form PCT/ISA/210 (patent family annex) (January 2015)